# FASCICULE DE BREVET EUROPEEN

(11) **EP 1 003 991 B1**
(45) Date de publication et mention de la délivrance du brevet: **19.09.2001**
(21) Numéro de dépôt: 98942832.1
(22) Date de dépôt: 04.09.1998
(51) Int. Cl.: F16L 55/26, F16L 55/40, B08B 9/04

(54) **DISPOSITIF POUR L'INSPECTION ET LE NETTOYAGE DE GAINES DE VENTILATION OU DE CLIMATISATION, ET AUTRES CANALISATIONS**
VORRICHTUNG ZUR INSPEKTION UND ZUM REINIGEN VON LÜFTUNGS- ODER KLIMAROHREN, UND ANDERE ROHRLEITUNGEN
DEVICE FOR INSPECTING AND CLEANING VENTILATION OR AIR-CONDITIONING CONDUITS, OR OTHER TYPES OF CONDUITS

(30) Priorité: 05.09.1997 FR 9711260
(43) Date de publication de la demande: 31.05.2000
(73) Titulaire: COMMISSARIAT A L'ENERGIE ATOMIQUE, 75015 Paris (FR); Caffon, Michel, 69330 Meyzieu (FR); Lanier, Joseph, 71680 Vinzelles (FR)
(72) Inventeur: CAFFON, Michel, F-69330 Meyzieu (FR); LANIER, Joseph, F-71680 Vinzelles (FR)
(74) Mandataire: Bratel, Gérard
(86) Numéro de dépôt international: FR9801903
(87) Numéro de publication internationale: WO9913260

(56) Documents cités:
- EP-A- 0 560 611
- DE-U- 8 513 770
- FR-A- 2 664 184
- US-A- 4 164 325
- US-A- 5 311 641

## Description

La présente invention concerne un dispositif pour l'inspection de gaines de ventilation ou de climatisation, appartenant à des installations de ventilation et de climatisation équipant notamment des bâtiments, ce dispositif s'appliquant aussi à l'inspection d'autres types de canalisations, telles que celles des réseaux d'assainissement.

La plupart des bâtiments existants, construits au cours des trente dernières années, sont équipés d'installations de ventilation ou de climatisation, qui permettent d'une part d'évacuer vers l'extérieur les pollutions et l'air vicié contenus à l'intérieur des bâtiments, et d'autre part de remplacer cet air vicié par de l'air extérieur, appelé air neuf hygiénique. L'évacuation de l'air vicié, ainsi que son remplacement par de l'air neuf hygiénique, sont assurés par l'intermédiaire de conduits ou gaines, constituant des réseaux plus ou moins complexes.

De telles installations de ventilation ou de climatisation, en particulier leurs gaines, sont difficilement accessibles notamment pour leur inspection et leur entretien, du fait qu'elles sont situées dans les faux plafonds ou les cloisons, ou bien incorporées dans le gros oeuvre des bâtiments. Le même problème d'accès se pose pour d'autres types de canalisations, telles que des tuyauteries enterrées.

Par ailleurs, la forme des gaines ou conduits d'air rencontrés dans de telles installations est très variable (sections de gaines rondes, ovales, rectangulaires, carrées, triangulaires), et les dimensions de ces gaines ou conduits sont elles aussi très variables, pouvant par exemple aller de 80mm à 1200mm de diamètre pour les gaines de section circulaire, et de 100 x 50mm à plusieurs mètres carrés, pour les gaines de section rectangulaire, aucun standard n'existant dans le dimensionnement des gaines de section rectangulaire. Les matériaux utilisés pour la fabrication de ces gaines sont divers (tôle, béton, fibre de verre, bois, textiles), et le mode d'assemblage des différents tronçons de gaines formant un réseau est, lui aussi, très variable (assemblage par brides, par cadres, par emboîtement... ), avec ou sans interposition de joints engendrant des fuites plus ou moins importantes, dès la mise en route initiale des installations.

De plus, au fil des années, des poussières et autres particules se déposent sur les parois internes des gaines, et engendrent des phénomènes indésirables d'augmentation des pertes de charge aérauliques, tout en créant des conditions extrêmement favorables à la prolifération des microorganismes, et en augmentant les risques d'incendie.

Il existe certes des procédés et matériels de nettoyage pour gaines ou conduits d'installations de ventilation et de climatisation. Par exemple, le document WO-93/24246 concerne un dispositif de nettoyage pneumatique de conduits, qui est introduit et déplacé à l'intérieur d'un conduit à nettoyer et qui y produit plusieurs jets d'air, au moyen de buses. Dans le même ordre d'idées, on peut aussi citer le brevet français n° 2 715 086. Cependant, ces dispositifs de nettoyage intervenant en des endroits inaccessibles pour l'oeil humain, tels que des gaines logées dans un faux plafond ou incorporées dans des cloisons, ou des trémies verticales maçonnées, il est impossible aux opérateurs de contrôler visuellement le déplacement et l'efficacité de tels dispositifs, en cours d'utilisation, ou de vérifier après coup le travail effectué par ces dispositifs de nettoyage.

On connaît aussi des dispositifs de nettoyage pour gaines de ventilation, au moyen de jets d'air ou de liquide, qui comportent déjà une caméra vidéo permettant l'inspection simultanée de l'intérieur de la gaine - voir la demande de brevet européen N° 0560611, le brevet US N° 5311641 ou le modèle d'utilité allemand N° 8513770. Dans tous ces documents, les moyens d'éjection de jets d'air ou de liquide, ainsi que la caméra, sont portés par un chariot qui roule sur le fond de la gaine. Cette solution comporte de nombreux inconvénients :
- complexité de réalisation de l'ensemble mobile, comprenant des roues et leurs moyens d'entraînement ;
- difficulté ou impossibilité de passage du chariot dans des gaines de petites dimensions, ou des gaines dans lesquelles sont rencontrés des obstacles (volets de dosage de débit, volets coupe-feu, pièges à sons) ;
- impossibilité de passage du chariot dans certains coudes, dans des piquages décalés en hauteur (par rapport au fond de la gaine principale), dans des gaines verticales, ou dans des gaines inclinées à forte pente ;
- inadaptation du dispositif, notamment en raison de son poids, dans le cas de gaines flexibles, ou de gaines en matériau fragile, notamment en fibres de verre (arrachage des fibres par les roues du chariot).

La présente invention vise à éviter tous ces inconvénients, en fournissant un dispositif conçu pour l'inspection visuelle des gaines ou conduits d'installations de ventilation et de climatisation, notamment en relation avec le nettoyage de ces gaines, le dispositif proposé par l'invention étant applicable quelles que soient les dimensions des gaines à inspecter, les matériaux constitutifs de ces gaines, la complexité géométrique du réseau de gaines de l'installation de ventilation ou de climatisation concernée, et la direction (horizontale, verticale ou oblique) des conduits à visiter.

A cet effet, l'invention a pour objet un dispositif pour l'inspection de gaines de ventilation ou de climatisation, et autres canalisations selon les caractéristiques de la revendication 1.

Un tel dispositif permet ainsi de capter des images de l'intérieur des gaines, en les transmettant à un opérateur situé à distance. De préférence, la tête mobile porte des moyens d'éclairage, utiles pour une captation optimale des images à l'intérieur de la gaine, ces moyens d'éclairage étant avantageusement constitués par une série de petites lampes ou de diodes électroluminescentes, disposées en cercle autour de l'objectif de la caméra. De préférence, les moyens d'éclairage sont à intensité lumineuse variable, réglable en particulier en fonction de la section de la gaine à inspecter, ainsi que de la nature de la surface interne ou du matériau constitutif de cette gaine, ou encore de son revêtement interne.

Selon un mode de réalisation préféré du dispositif objet de l'invention, les moyens d'éjection précités sont agencés de manière à diriger les jets d'air selon une direction oblique, opposée à l'objectif de la caméra, pour l'avancement de la tête mobile à l'intérieur de la gaine ou canalisation à inspecter. On obtient ainsi un dispositif "dynamique", qui assure non seulement la sustentation de la tête mobile, mais aussi son avancement dans la gaine, pour l'inspection de cette gaine sur une certaine longueur, en supprimant toute structure du genre chariot et ses inconvénients.

Dans un mode d'exécution pratique, la tête mobile se compose d'une première partie, de forme générale cylindrique et creuse, servant de logement à la caméra et portant les éventuels moyens d'éclairage, et d'une seconde partie de forme générale tronconique, accolée à la première partie et comportant une arrivée centrale d'air comprimé, prolongée par des canaux internes obliques débouchant par des orifices de sortie d'air comprimé répartis sur la périphérie de ladite seconde partie. Cette tête mobile est reliée, par un tuyau flexible d'air comprimé raccordé à son arrivée centrale d'air comprimé, à un appareillage extérieur comprenant au minimum un compresseur et un module de commande avec une source d'énergie pour la caméra et/ou l'éclairage, et avec un moniteur vidéo.

On obtient ainsi, dans l'ensemble, un dispositif de faibles dimensions et poids qui se déplace à l'intérieur de la gaine ou canalisation à inspecter, par l'effet de l'air comprimé projeté à grande vitesse, et qui fournit en permanence, au cours de son avancement, des images de l'intérieur de la gaine qui sont visualisables sur le moniteur vidéo de contrôle et qui, bien entendu, peuvent aussi être enregistrées par un magnétoscope, ce qui permet de connaître l'état intérieur de la gaine. On notera aussi que les jets d'air assurent par eux-mêmes un dépoussiérage de la gaine inspectée, l'orientation de ces jets étant telle que la poussière soulevée ne gêne pas la "vision" de la caméra.

L'invention sera de toute façon mieux comprise à l'aide de la description qui suit, en référence au dessin schématique annexé représentant, à titre d'exemple, une forme d'exécution de ce dispositif pour l'inspection de gaines de ventilation ou de climatisation :
Figure 1 est une vue d'ensemble, en perspective, d'un dispositif conforme à la présente invention, représenté en cours d'utilisation ;
Figure 2 est une vue en perspective de la seule tête mobile du dispositif ;
Figure 3 est une vue en coupe longitudinale de cette tête mobile, dont les deux parties ont été ici représentées légèrement écartées l'une de l'autre ;
Figure 4 est une vue en bout de ladite tête mobile.

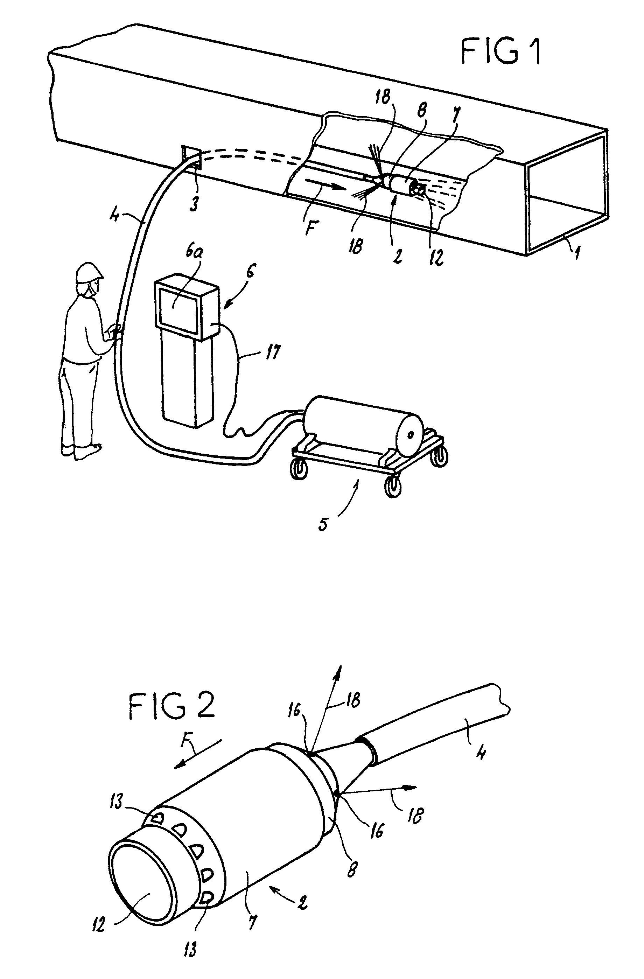

La figure 1 représente, dans son ensemble, un dispositif permettant d'inspecter l'intérieur d'une gaine 1, dans l'exemple considéré de section rectangulaire, appartenant à une installation de ventilation ou de climatisation. Le dispositif comprend une tête mobile 2, introduite à l'intérieur de la gaine 1 à inspecter par une ouverture latérale 3 de celle-ci, et reliée par un tuyau flexible 4, traversant l'ouverture 3, à un appareillage extérieur. Ce dernier comprend, en particulier, un compresseur 5 et un module de commande et d'alimentation 6, avec un moniteur vidéo 6a sur sa face avant.

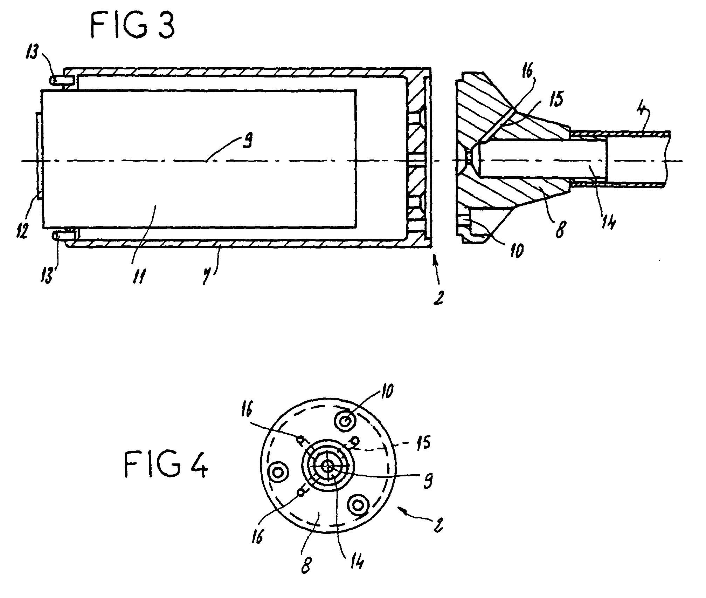

En se référant aux figures 2 à 4, la tête mobile 2 se compose de deux parties principales accolées, à savoir une première partie de forme générale cylindrique 7, et une seconde partie de forme générale tronconique 8, disposées suivant un même axe central 9, et assemblées l'une à l'autre par des vis (non représentées) introduites dans des trous 10 parallèles à l'axe 9.

La partie cylindrique 7 est de conformation creuse, et ouverte à son extrémité opposée à la partie tronconique 8. Cette partie cylindrique 7 reçoit intérieurement une petite caméra vidéo 11, de type connu, dont l'objectif 12 apparaît au niveau de l'extrémité ouverte de ladite partie 7.

A son extrémité ouverte, la partie cylindrique 7 porte une série de petites lampes 13, d'intensité lumineuse réglable, telles que des diodes électroluminescentes, disposées en cercle et à intervalles angulaires réguliers tout autour de l'objectif 12 de la caméra 11, de manière à constituer un éclairage périphérique.

La partie tronconique 8 de la tête mobile 2 comporte une arrivée centrale d'air comprimé 14, qui est prolongée par une pluralité de canaux internes 15 débouchant à la surface de cette partie tronconique 8, de manière à former plusieurs orifices de sortie d'air comprimé 16, répartis sur la périphérie de ladite partie tronconique 8. Les canaux internes 15 sont dirigés, en oblique, vers la périphérie et l'arrière de la partie tronconique 8, l'angle formé par les canaux 15 avec l'axe central 9 étant par exemple compris entre 30° et 45°.

Le tuyau flexible 4 relie le compresseur 5 à l'arrivée d'air comprimé 14 de la partie tronconique 8 de la tête mobile 2. Il est en outre prévu, entre le module de commande 6 et la tête mobile 2, des liaisons électriques indiquées partiellement en 17 sur la figure 1, qui d'une part assurent l'alimentation électrique de la caméra vidéo 11 et des lampes 13 associées, et d'autre part véhiculent le signal vidéo, fourni par la caméra 11, jusqu'au moniteur 6. Ces liaisons électriques peuvent passer à l'intérieur du tuyau flexible 4, ou être noyées dans l'épaisseur de ce tuyau flexible 4.

En cours d'utilisation, comme illustré aux figures 1 et 2, la tête mobile 2 introduite dans la gaine 1 est alimentée en air comprimé, par exemple sous une pression comprise entre 6 et 15 bars et avec un débit d'air compris entre 20 et 40 mètres-cubes par heure. L'air comprimé s'échappe par les orifices de sortie 16, sous la forme de jets 18 à haute vitesse qui viennent percuter les faces de la gaine 1. En raison de leur inclinaison, les jets d'air 18 assurent non seulement la sustentation de la tête mobile 2, mais aussi son avancement, dans le sens de la flèche F, à l'intérieur de la gaine 1.

Au cours de l'avancement de la tête mobile 2, la caméra 11 prend des images de l'intérieur de la gaine 1, éclairé par les lampes 13. Par la liaison vidéo 17, ces images sont transmises au moniteur 6a, qui permet à l'opérateur de les visualiser. Un enregistrement simultané des images est aussi possible.

La tête mobile 2 peut ainsi progresser dans la gaine 1, sur la longueur permise dans le tuyau flexible 4, par exemple sur une trentaine de mètres, éventuellement en décrivant des angles. Pour faciliter cette manipulation, le tuyau flexible 4 peut être dévidé au moyen d'un enrouleur. Pour ramener la tête mobile 2 à son point de départ, et éventuellement l'extraire de la gaine 1 par l'ouverture 3, il suffit d'interrompre l'arrivée d'air comprimé, et de tirer manuellement sur le tuyau flexible 4.

Simultanément à l'avancement de la tête mobile 2, les jets d'air 18 assurent un décollement des poussières déposées sur les parois de la gaine 1, sans gêner la "vision" de la caméra 11.

L'on ne s'éloignerait pas du cadre de l'invention :
- par des modifications de détail, portant sur les formes et la structure de la tête mobile 2 ;
- par l'adjonction de moyens auxiliaires, tels que des moyens de repérage de l'orientation de la caméra 11, permettant d'améliorer le fonctionnement du dispositif ;
- par l'utilisation, en lieu et place des lampes 13, de moyens d'éclairage spéciaux, notamment de type infrarouge ayant l'avantage de dégager très peu de chaleur ;
- par l'application du même dispositif à l'inspection de canalisations appartenant à des réseaux divers, en particulier l'inspection de canalisations appartenant à des réseaux d'assainissement, l'intérêt de la solution objet de l'invention (en comparaison avec les robots d'inspection motorisés actuels) étant ici de supprimer tout moteur, de permettre l'inspection de tuyauteries de faible section, et de faciliter le choix de la trajectoire du dispositif d'inspection, notamment aux embranchements ;
- par l'utilisation d'une caméra 11 spéciale, adaptée à une application particulière, telle qu'une caméra "gamma" servant à détecter des pics de contamination radioactive, ceci pour l'inspection d'installations nucléaires.

## Revendications

1. Dispositif pour l'inspection et le nettoyage de gaines de ventilation ou de climatisation, et autres canalisations, le dispositif comprenant : une tête mobile (2) prévue pour être introduite dans une gaine (1) ou un réseau de gaines à inspecter, ou autre canalisation ou réseau de canalisations, la tête mobile (2) renfermant une caméra vidéo (11, 12), et cette tête mobile (2) comportant des moyens d'éjection (15, 16) de jets de fluide (18), dirigés vers les parois de la gaine (1) ou canalisation et assurant l'avancement de ladite tâte mobile (2) ; des moyens extérieurs de visualisation (6) et/ou d'enregistrement des images de l'intérieur de la gaine (1) ou canalisation, auxquels est reliée la caméra vidéo (11 ; 12) ; et une source extérieure de fluide sous pression (5), à laquelle sont raccordés les moyens d'éjection (15, 16) précités, **caractérisé en ce que** ladite source extérieure de fluide sous pression est une source d'air comprimé (5), et en ce que lesdits moyens d'éjection (15,16) sont des moyens d'éjection de jets d'air (18), reliés à la source d'air comprimé (5), lesdits jets d'air assurant non seulement le nettoyage de la gaine (1) ou canalisation inspectée et l'avancement de la tête mobile (2), mais aussi la sustentation de ladite tête mobile (2).

2. Dispositif pour l'inspection et le nettoyage de gaines de ventilation ou de climatisation, et autres canalisations, selon la revendication 1, **caractérisé en ce que** la tête mobile (2) porte des moyens d'éclairage (13).

3. Dispositif pour l'inspection et le nettoyage de gaines de ventilation ou de climatisation, et autres canalisations, selon la revendication 2, **caractérisé en ce que** les moyens d'éclairage, portés par la tête mobile (2), sont constitués par une série de petites lampes ou de diodes électroluminescentes (13), disposées en cercle autour de l'objectif (12) de la caméra (11).

4. Dispositif pour l'inspection et le nettoyage de gaines de ventilation ou de climatisation, et autres canalisations, selon la revendication 2 ou 3, **caractérisé en ce que** les moyens d'éclairage (13) sont à intensité lumineuse variable.

5. Dispositif pour l'inspection et le nettoyage de gaines de ventilation ou de climatisation, et autres canalisations, selon l'une quelconque des revendications 1 à 4, **caractérisé en ce que** les moyens d'éjection (15, 16) sont agencés de manière à diriger les jets d'air (18) selon une direction oblique, opposée à l'objectif (12) de la caméra (11), pour permettre l'avancement de la tête mobile (2) à l'intérieur de la gaine (1) ou canalisation à inspecter.

6. Dispositif pour l'inspection et le nettoyage de gaines de ventilation ou de climatisation, et autres canalisations, selon la revendication 5, **caractérisé en ce que** la tête mobile (2) se compose d'une première partie (7), de forme générale cylindrique et creuse, servant de logement à la caméra (11) et portant les éventuels moyens d'éclairage (13), et d'une seconde partie (8) de forme générale tronconique, accolée à la première partie (7) et comportant une arrivée centrale d'air comprimé (14), prolongée par des canaux internes obliques (15) débouchant par des orifices de sortie d'air comprimé (16) répartis sur la périphérie de ladite seconde partie (8).

7. Dispositif pour l'inspection et le nettoyage de gaines de ventilation ou de climatisation, et autres canalisations, selon l'une quelconque des revendications 1 à 6, **caractérisé en ce que** sa tête mobile (2) est reliée, par un tuyau flexible (4) d'air comprimé et par des liaisons électriques (17), à un appareillage extérieur comprenant au minimum un compresseur (5) et un module de commande (6) avec une source d'énergie pour la caméra (11) et/ou l'éclairage (13), et avec un moniteur vidéo (6a).

## Claims

1. Device for the inspection and cleaning of ventilation or air-conditioning ducts and of other conduits, the device comprising: a movable head (2) intended to be introduced into a duct (1) or a network of ducts to be inspected or other conduit or network of conduits, the movable head (2) containing a video camera (11, 12), and this movable head (2) comprising means (15, 16) for the ejection of fluid jets (18), directed towards the walls of the duct (1) or conduit and ensuring the advance of the said movable head (2); external means (6) for the display and/or recording of the images of the interior of the duct (1) or conduit, to which means the video camera (11; 12) is connected; and an external source of fluid under pressure (5), to which the abovementioned ejection means (15, 16) are connected, **characterized in that** the said external source of fluid under pressure is a compressed-air source (5), and in that the said ejection means (15, 16) are means for the ejection of air jets (18), connected to the compressed-air source (5), the said air jets ensuring not only the cleaning of the inspected duct (1) or conduit and the advance of the movable head (2), but also the support of the said movable head (2).

2. Device for the inspection and cleaning of ventilation or air-conditioning ducts and of other conduits, according to Claim 1, **characterized in that** the movable head (2) carries lighting means (13).

3. Device for the inspection and cleaning of ventilation or air-conditioning ducts and of other conduits, according to Claim 2, **characterized in that** the lighting means, carried by the movable head (2), consist of a series of small lamps or of light-emitting diodes (13) arranged in a circle around the lens (12) of the camera (11).

4. Device for the inspection and cleaning of ventilation or air-conditioning ducts and of other conduits, according to Claim 2 or 3, **characterized in that** the lighting means (13) have a variable light intensity.

5. Device for the inspection and cleaning of ventilation or air-conditioning ducts and of other conduits, according to any one of Claims 1 to 4, **characterized in that** the ejection means (15, 16) are arranged so as to direct the air jets (18) in an oblique direction opposite to the lens (12) of the camera (11), in order to make it possible for the movable head (2) to advance inside the duct (1) or conduit to be inspected.

6. Device for the inspection and cleaning of ventilation or air-conditioning ducts and of other conduits, according to Claim 5, **characterized in that** the movable head (2) is composed of a first part (7) of cylindrical and hollow general shape, serving as a housing for the camera (11) and carrying the possible lighting means (13), and of a second part (8) of frustoconical general shape, attached to the first part (7) and comprising a central compressed-air intake (14) extended by oblique inner channels (15) opening out via compressed-air outlet orifices (16) distributed on the periphery of the said second part (8).

7. Device for the inspection and cleaning of ventilation or air-conditioning ducts and of other conduits, according to any one of Claims 1 to 6, **characterized in that** its movable head (2) is connected, by means of a flexible compressed-air pipe (4) and by means of electrical connections (17), to an external apparatus comprising at least a compressor (5) and a control module (6) with a power source for the camera (11) and/or the lighting (13) and with a video monitor (6a).

## Patentansprüche

1. Vorrichtung zur Inspektion und Reinigung der Leitungen vor. Lüftungs- und Klimaanlagen und anderen Rohrleitungen, wobei die Vorrichtung umfasst: einen beweglichen Kopf (2) der dafür vorgesehen ist, in eine zu inspizierende Lüftungsleitung (1) oder in ein zu inspizierendes Netz von Lüftungsleitungen oder in eine andere Rohrleitung oder ein anderes Rohrleitungsnetz eingeführt zu werden, wobei der bewegliche Kopf (2) eine Videokamera (11, 12) beherbergt, und dieser bewegliche Kopf (2) Mittel zum Spritzen (15, 16) von Strahlen eines flüssigen oder gasförmigen Mediums (18) enthält, die auf die Wandungen der Lüftungsleitung (1) oder Rohrleitung gerichtet sind und die Vorwärtsbewegung des besagten beweglichen Kopfes (2) gewährleisten; außen befindliche Mittel zum Sichtbarmachen (6) und/oder Aufzeichnen der Bilder aus dem Innern der Lüftungsleitung (1) oder der Rohrleitung, mit denen die Videokamera (11; 12) verbunden ist; und eine außen befindliche Quelle eines unter Druck stehenden Mediums (5), an die die vorerwähnten Mittel zum Spritzen (15, 16) angeschlossen sind, **dadurch gekennzeichnet, dass** die besagte außen befindliche Quelle des unter Druck stehenden Mediums eine Quelle für Druckluft (5) ist, und dadurch, dass die besagten Mittel zum Spritzen (15, 16) Mittel zum Spritzen von Luftstrahlen (18) sind, die mit der Quelle für Druckluft (5) verbunden sind, wobei die besagten Druckstrahlen nicht nur die Reinigung der inspizierten Lüftungsleitung (1) oder Rohrleitung und die Vorwärtsbewegung des beweglichen Kopfes (2) gewährleisten, sondern auch das Schweben des gesagten beweglichen Kopfes (2).

2. Vorrichtung zur Inspektion und Reinigung der Leitungen von Lüftungs- oder Klimaanlagen und anderen Rohrleitungen nach Anspruch 1, **dadurch gekennzeichnet, dass** der bewegliche Kopf (2) Mittel zur Beleuchtung (13) trägt.

3. Vorrichtung zur Inspektion und Reinigung der Leitungen von Lüftungs- oder Klimaanlagen und anderen Rohrleitungen nach Anspruch 2. **dadurch gekennzeichnet, dass** die Mittel zur Beleuchtung, die der bewegliche Kopf (2) trägt, aus einer Reihe von Lämpchen oder lichtemittierenden Dioden (13) besteht, die in einem Kreis um das Objektiv (12) der Kamera (11) herum angeordnet ist.

4. Vorrichtung zur Inspektion und Reinigung von Leitungen von Lüftungs- oder Klimaanlagen und anderen Rohrleitungen nach Anspruch 2 oder 3, **dadurch gekennzeichnet, dass** die Mittel zur Beleuchtung (13) eine veränderliche Lichtintensität aufweisen.

5. Vorrichtung zur Inspektion und Reinigung von Leitungen von Lüftungs- oder Klimaanlagen und anderen Rohrleitungen nach einem beliebigen der Ansprüche 1 bis 4, **dadurch gekennzeichnet, dass** die Mittel zum Spritzen (15, 15) so angeordnet sind, dass die Luftstrahlen (18) in schräger und vom Objektiv (12) der Kamera (11) abgewandten Richtung lenken, um die Vorwärtsbewegung des beweglichen Kopfes im Innern der zu inspizierenden Lüftungsleitung (11) oder Rohrleitung zu ermöglichen.

6. Vorrichtung zur Inspektion und Reinigung von Leitungen von Lüftungs- oder Klimaanlagen und anderen Rohrleitungen nach Anspruch 5, **dadurch gekennzeichnet, dass** der bewegliche Kopf (2) zusammengesetzt ist aus einem ersten Teil (7) von im allgemeinen zylindrischer und hohler Form, der zur Unterbringung der Kamera (11) dient und eventuell die Mittel zur Beleuchtung (13) trägt, und einem zweiten Teil (8), der im allgemeinen die Form eines Kegelstumpfes hat und an den ersten Teil angebaut ist und eine zentrale Eintrittsstelle für Druckluft (14) enthält, welche in schrägen inneren Kanälen (15) ihre Verlängerung findet, die wiederum in Austrittsöffnungen für die Druckluft (16), die über den Umfang des besagten zweiten Teils (8) verteilt sind, münden.

7. Vorrichtung zur Inspektion und Reinigung von Leitungen von Lüftungs- oder Klimaanlagen und anderen Rohrleitungen nach einem beliebigen der Ansprüche 1 bis 6, **dadurch gekennzeichnet, dass** ihr beweglicher Kopf (2) über einen Druckluftschlauch (4) und über elektrische Verbindungen (17) mit einer äußeren Apparatur verbunden ist, welche zumindest einen Kompressor (5) und einen Baustein zur Steuerung (6) mit einer Energiequelle für die Kamera (11) und/oder die Beleuchtung (13) enthält, und die mit einem Video-Monitor (6a) ausgestattet ist.
